# EUROPEAN PATENT APPLICATION

(11) **EP 4 015 849 A1**
(43) Date of publication of application: **22.06.2022**
(21) Application number: 21212808.6
(22) Date of filing: 07.12.2021
(51) Int. Cl.: F16C 7/06, D06F 37/22, D06F 37/24

(54) **ROTATIONAL VIBRATION DAMPENING DEVICE AND A LAUNDRY CARE APPLIANCE COMPRISING THE ROTATIONAL VIBRATION DAMPENING DEVICE**

(30) Priority: 21.12.2020 EP 20383128
(71) Applicant: BSH Hausgeräte GmbH, 81739 München (DE)
(72) Inventor: Martinez Perez, Gerardo, 50015 Zaragoza (ES)

(57) **Abstract**

The invention relates to a rotational vibration dampening device for a laundry care appliance having a first joint rod, with a first end and a second end, and a second joint rod, with a first end and a second end, wherein the first end of the second joint rod is connected with the first end of the first joint rod, wherein the second end of the first joint rod can be connected to a housing of a laundry care appliance and the second end of the second joint rod can be connected to an oscillating system of a laundry care appliance, wherein at least one of the joint rods has a variable length and comprises a first component and a second component that can be connected to each other in at least two different positions, thereby obtaining at least two different lengths of joint rod.

## Description

The present invention relates to a rotational vibration dampening device and a laundry care appliance comprising the rotational vibration dampening device.

From the prior art, laundry care appliances such as washing machines and/or dryers are known, which comprise a washing drum mounted to be able to rotate about a horizontal axis, which can also oscillate in the housing. The vibration dampening devices connected to the bottom of the housing can be linear dampers, e.g. oil dampers or the like. In these embodiments, two components of the vibration dampening device are coaxially aligned in their respective longitudinal axes and can be moved on top of one another along their longitudinal axes on a friction element responsible for dampening vibrations.

Furthermore, rotational vibration dampening devices or rotational dampers are also known, which are vibration dampening devices. These usually have two joint rods that are connected to each other. This design is known, for example, from DE1842817U.

However, this type of rotational vibration dampening devices is usually used in different models of laundry care appliances. This has as a consequence that, depending on the size of the oscillating group and/or depending on the size of the housing, different rotational vibration dampening devices comprising joint rods of different lengths are required so that they work in a correct manner in the different models of laundry care appliances. This has as a consequence that joint rods of different lengths need to be manufactured so that the rotational vibration dampening device works optimally according to the environment in which it is to be utilized. The fact of having to manufacture joint rods of different lengths provokes an additional expenditure for moulds or production lines of said joint rods as well as a high complexity in the manufacture and management of said rotational vibration dampening devices. Moreover, this may cause that some references of joint rods become obsolete as a consequence of the fact that the device in which they were going to be mounted is not manufactured anymore. This implies a high economic cost in pieces that cannot be universally utilized and complicates the planning of the different models of joint rods that are to be manufactured according to the production needs of the same. Besides, this has as a consequence that a single vibration dampening device cannot be adapted to work properly in several models of laundry care appliances.

The present invention solves said technical problems by means of a rotational vibration dampening device comprising at least a joint rod whose length can be varied in a very simple and cheap manner and which brings about that a vibration dampening device comprising at least one of those joint rods can work optimally in different models of laundry care appliances. Furthermore, these vibration dampening devices comprising at least a joint rod of a variable length will not become obsolete as a consequence of that the environment in which there were going to be mounted is not manufactured anymore and can be adapted in a very simple manner to new working environments. Therefore, the same reference can be utilized in more than one model of laundry care appliance.

This technical problem is solved by means of a rotational vibration dampening device and a laundry care appliance comprising a rotational vibration dampening device according to the independent claims. Preferred embodiments of the invention are disclosed in the dependent claims.

A rotational vibration dampening device for a laundry care appliance according to the invention is configured comprising a first joint rod, which has a first end and a second end opposite to the fist end, and a second joint rod, which has a first end and a second end opposite to the first end, wherein the first end of the second joint rod is connected with the first end of the first joint rod, wherein the second end of the first joint rod can be connected to a housing of a laundry care appliance and the second end of the second joint rod can be connected to an oscillating system of a laundry care appliance, comprising at least one of the joint rods of a variable length and the at least one joint rod of a variable length comprises a first component and a second component that can be connected to each other in at least two different positions, thereby obtaining at least two different lengths of joint rod.

In this manner, a single rotational damper can be adapted very easily to different working environments by varying the length of the at least one joint rod of a variable length quickly and easily. Besides, the number of moulds or tools required to manufacture the joint rods of different lengths is reduced in this manner, since a sole reference of joint rod is sufficient in this way to produce different damper references. In the same manner, the risk of some damper models becoming obsolete and having to remove them with the consequent damage to the environment is reduced. This entails a very important economic and environmental advantage. Finally, in this manner a single model of rotational damper can be utilized in different models of household appliances, mainly laundry care appliances. This also makes the work of the technical service easier since they only need to take with them a damper reference in case one of the dampers broke down and needs to be replaced. Obviously, it is possible to produce rotational dampers in which both joint rods have a variable length. This increases even more the flexibility of said rotational dampers.

A rotational vibration dampening device has at least a first joint rod, which has a first end and a second end opposite to the first end, and a second joint rod, which has a first end and a second end opposite to the first end, wherein the first end of the second joint rod is connected with the first end of the first joint rod in a first rotation articulation, wherein the second end of the first joint rod can be connected to a housing of a laundry care appliance in a second rotation articulation and the second end of the second joint rod can be connected to an oscillating system of a laundry care appliance in a third rotation articulation. Said rotational vibration dampening device is characterized by the fact that it contains at least a rotation articulation providing frictional resistance to rotation, also known as a friction articulation. In a vibration dampening device, the expression "articulation providing frictional resistance to rotation" or "friction articulation" includes the concept of a rotation articulation in which the friction values during a rotation of the same exceed 10 N, the values preferably ranging from 20 N to 120 N and, more preferably, from 30 N to 60 N.

The articulation providing frictional resistance to rotation can be the first rotation articulation and/or the second rotation articulation and/or the third rotation articulation. Obviously, all of them (first rotation articulation, second rotation articulation and third rotation articulation) can be articulations providing frictional resistance to rotation in the same rotational vibration dampening device, wherein each rotational dampening device can have one, two or three rotation articulations providing frictional resistance to rotation.

In a particular embodiment of the invention, the vibration dampening device comprises a first component and a second component that are connectable to each other by a positive connection, by pressure or by any combination of these methods.

This embodiment has the advantage consisting in that no additional connecting element is required. This reduces the costs both regarding the connecting element itself and the logistic and management expenses of the same. Furthermore, these connecting methods of the first and the second component of the joint rod are very intuitive and easy to carry out both manually and automatically in a production line.

In a particular embodiment of the invention, the vibration dampening device comprises a first component and a second component that can be connected to each other by glueing, soldering, welding or by any combination of said connecting techniques.

The vibration dampening device of this embodiment has additional alternatives to realize the connection of the fist and the second component. Besides, since the connecting modes by glueing and soldering or welding are complementary to those previously described, they can be used alone as more robust fixing modes or as a complement to the previously described connection alternatives. Using them in a complementary manner can be particularly advantageous in the case of vibration dampening devices, which have undergone at least a reparation that might have made the positive connection, the pressure connection or the connection by any combination of both of them less effective as a consequence of undesired clearances that have occurred in the connecting area of the first component with the second component. These additional connecting techniques by glueing or soldering/welding can help increase the lifetime of the joint rods of a variable length in an easy and cheap manner.

In another particular embodiment of the invention, the vibration dampening device comprises a first component and a second component that can be connected to each other by a connecting element.

The main advantage of this particular embodiment is that this is complementary to those previously described and can be used alone or as a complement to the previously described connection alternatives. Using it in a complementary manner, mainly to the connecting modes consisting in a positive connection, by pressure or a combination of both methods, can be particularly advantageous in the case of vibration dampening devices, which have undergone at least a reparation that might have made the positive connection, the pressure connection or the connection by any combination of both of them less effective as a consequence of undesired clearances that have occurred in the connecting area of the first component with the second component. This particular embodiment of a connection by means of an additional connecting element can help increase the lifetime of the joint rods of a variable length in an easy and cheap manner.

An "additional connecting element" is understood to be any element of the type rivet, screw, bolt, screw with washer, screw-nut mechanism, clamp mechanism or, obviously, any combination of them. Any of these connecting elements are mechanical connecting elements sufficiently tested and sufficient to withstand the mechanical requirements borne by a vibration dampening device in use. Moreover, they are connecting elements that can be placed in situ in the own vibration dampening device in its place of operation if any type of damage in the original connection is observed. With any of these connecting elements, the joint rod can be easily adjusted to the usage length required.

In a particular embodiment of the invention, the vibration dampening device comprises at least one joint rod of a variable length, which, in turn, comprises a first component containing at least a housing and a second component containing at least a protuberance so that the at least one housing of the first component and the at least one protuberance of the second component can be connected to each other in at least two different positions, thereby obtaining at least two different lengths of joint rod.

This embodiment has the advantage consisting in that several connecting positions between the first and the second component can be defined, joint rods of different lengths being thereby produced. Preferably, the first component can contain at least two housings so, with a sole protuberance at the second component, the first and the second component can be connected to each other in at least two different positions, thereby generating a joint rod with at least two different lengths. In this manner, it is easy to achieve a joint rod with n possible different lengths by means of n housings and a protuberance. Obviously, the number of protuberances at the second component can be also increased so that there are more protuberances that can be connected to the housings of the first component so as to ease a more rigid connection if required. Preferably, the first component will have more housings than protuberances the second component will have.

Another exemplary possibility is that the housing has an axial dimension bigger than any of the dimensions of the protuberance and then joint rods of different lengths can be achieved with a sole housing and a sole protuberance. This could be achieved by displacing the protuberance along the housing in axial direction of the housing and connecting fixedly the first component with the second component. Moreover, notches can be arranged in the inner zone of the housing acting as a reference to position the protuberance inside the housing, each of these notches defining a different position. Obviously, the first and the second component can be also connected to each other by any previously described connection type in all of these cases. In this case, any piece fitting into the gap of the housing not occupied by the protuberance can be also considered to be an additional connecting element. In this manner, one or more pieces with such a geometry that they fill the empty space between the protuberance and the housing can be considered a connecting element. This piece would have any adequate geometry to fill said empty space as if it were a puzzle.

In a particular embodiment of the invention, the at least one housing of the first component and the at least one protuberance of the second component can be connected to each other by a positive connection, by pressure or by any combination of these methods.

The main advantage of this configuration consists in that joint rods of different lengths can be generated in a quick and easy manner. The first component and the second component can be connected and separated even manually to connect them again in the required position depending on the required length of joint rod.

In a particular embodiment of the invention, the at least one joint rod of a variable length comprises a first component containing at least a housing and a second component containing at least a housing so that the first component and the second component can be connected to each other in at least two different positions, thereby obtaining at least two different lengths of joint rod.

This configuration is advantageous in situations where the space is limited and having joint rods occupying little space is of interest. In this way, the first component and the second component can have a substantially flat shape in such a manner that both of them can be connected to each other sandwich-like. The required spaced is thereby minimized. This configuration can be particularly advantageous for household appliances like, for example, washer-dryers since washer-dryers need to have many components in a space limited by the housing and it is very advantageous to have rotational dampers whose joint rods occupy very little space.

In a particular embodiment of the invention, the at least one housing of the first component and the at least one protuberance of the second component have such a geometry that it prevents rotation of the first component relative to the second component.

This embodiment is advantageous since, if the protuberance can turn or rotate inside the housing, it can make the rotational damper not to have the desired behaviour. This connecting mode of the first and the second component the joint rod of a variable length is composed of gives rigidity and guarantees that the rotational damper works under optimal conditions and like rotational dampers whose joint rods are made of just one compact piece.

In another advantageous embodiment of the invention, said geometry corresponds to that of a polygon of n sides, n being preferably bigger or equal to 3 and smaller or equal to 12, wherein n is more preferably bigger or equal to 4 and smaller or equal to 6 and, even more preferably, n equals 4.

This embodiment is advantageous since the turn or rotation of the first component on the second component can be prevented in an easy and cheap manner. The housing of the first component and the protuberance of the second component need to have the same geometry so that they cannot rotate o turn relative to each other when the first component is connected to the second component. This can be achieved very easily with polygons of n sides, n being preferably smaller than 12, more preferably smaller than 6 and, even more preferably, n being equal to 3 or equal to 4. For example, any type of triangle is included in 3-sided polygons regardless of the length of their sides and every type of quadrangle of any shape is included in 4-sided polygons, i.e. parallelograms, trapeziums and trapezoids. Squares and rectangles are the favourite configurations among 4-sided polygons since they offer a good compromise between an easy manufacture and having 90 degree angles between their sides, which prevents the turn or rotation of the first component on the second component.

In another advantageous embodiment of the invention, the housing is continuous.

This embodiment has the advantage consisting in allowing a simple visual control on whether the connection between the components is correct. Furthermore, the contact surface of the protuberance inside the housing can be increased. The neck section of the protuberance entering the housing can be increased making it a continuous section. This can be particularly advantageous in the configuration in which the first and the second component are connected to each other only by a positive connection or by pressure, for example.

In another advantageous embodiment of the invention, the at least one protuberance of the second component comprises a retaining element and, once the first component and the second component are connected to each other, said retaining element collides with at least a section of the perimeter surrounding the at least one housing of the first component, thereby preventing the separation of the first component and the second component.

This embodiment is even more advantageous than the previous one to avoid a separation between the first and the second component. In a possible embodiment, the at least one protuberance of the second component has a neck of the same length than the thickness of the first component containing the at least one housing and this neck of the protuberance has a retaining element at the end of the same protruding outwards relative to the geometric centre of the neck section of the protuberance in such a manner that, once the protuberance of the second component has crossed the housing of the first component, said retaining element collides with at least a section of the perimeter of the housing of the component, thereby preventing or at least making the separation of the first component from the second component difficult. Depending on to which extent it is intended to make the separation of the first and the second component difficult, the area of the retaining element colliding against the perimeter of the at least one housing can be increased. This increase of section can be easily achieved by increasing the area of the perimeter which it contacts as well as by increasing the dimension of said retaining element outwards relative to the geometric centre of the protuberance.

In another advantageous embodiment of the invention, the retaining element collides with the entire perimeter of the at least one housing of the first component, thereby preventing the separation of the first component and the second component.

This embodiment is advantageous when it is intended to secure the connection of the first component with the second component or, in other words, you want to prevent or make difficult the separation of both components forming the joint rod of a variable length. If the retaining element of the protuberance of the second component collides with the entire perimeter of the housing of the first component, the collision area has been increased and, therefore, a separation of the first component relative to the second component is less likely to occur.

In another advantageous embodiment of the invention, the first joint rod and the second joint rod are made of plastics and/or metal.

These embodiments can be advantageous depending on the mechanical requirements to which the rotational damper is subject or depending on the space in which it has to work. If the mechanical requirements are not very high, plastics is a good alternative since it is cheap and each of the moulds can manufacture batches having a very high number of pieces. Furthermore, making protuberances with retaining elements of plastics favours the assembly of the first component with the second component and also makes the disassembly of both components possible. If the mechanical requirements are high or the space available to mount the rotational damper is reduced, using metal joint rods is advantageous since high mechanical resistances can be achieved with joint rods of a short length.

Furthermore, the invention relates to a laundry care appliance for caring washing items comprising a housing in which an oscillating system is mounted, wherein the laundry care appliance comprises at least a vibration dampening device according to any of the previously described embodiments.

Other features of the invention derive from the claims, the figures and the description of the figures. The features and combinations of features mentioned above in the description as well as the features and combinations of features mentioned in the following in the description of the figures and/or shown alone in the figures are usable not only in the combination indicated in each case but also in other combinations, without leaving the scope of the invention. Thus, it is to be understood that those embodiments of the invention not shown explicitly in the figures or explained but that can be derived through combinations of separate features of the set-forth embodiments, and which can be generated from these, are also comprised and disclosed by the invention. Therefore, those embodiments and combinations of features not having all the features from an originally formulated independent claim shall be deemed to be disclosed. Furthermore, those explanations and combinations of features going beyond or differing from the combinations of features set forth in references to the claims shall be deemed to be disclosed by means of the above-mentioned embodiments.

The embodiments of the invention are explained more in detail in the following making reference to the schematic drawings. These show in:
- Fig. 1: a schematic front view of an embodiment of a laundry care appliance according to the invention;
- Fig. 2a: a representation of a rotational vibration dampening device according to the state of the art, wherein the joint rods are of a fixed length;
- Fig. 2b: a representation of a rotational vibration dampening device according to the state of the art, wherein the joint rods are of a fixed length;
- Fig. 3: a representation of possible complementary profiles of first component and second component of joint rod that can be connected to each other by a positive connection and/or pressure,
- Fig. 4a: a representation of a joint rod of a rotational damper in which the first and the second component according to figure 3 are in a first mounting position of joint rod generating a first length of joint rod;
- Fig. 4b: a representation of a joint rod of a rotational damper in which the first and the second component according to figure 3 are in a second mounting position of joint rod generating a second length of joint rod, in this case bigger than the length from figure 4a;
- Fig. 5: an alternative representation of a first component containing circular housings and of a second component comprising cylindrical protuberances that can be connected to each other in different positions to generate a joint rod of different lengths;
- Fig. 6a: a representation of a joint rod in which the first and the second component according to figure 5 are in a first mounting position of joint rod generating the minimum length possible of joint rod with that configuration of the first and the second component;
- Fig. 6b: a representation of a joint rod in which the first and the second component according to figure 5 are in a second mounting position of joint rod generating the maximum length possible of joint rod with that configuration of the first and the second component;
- Fig. 7: an alternative representation of a first component containing housings and of a second component also containing housings that can be connected to each other in different positions to generate a joint rod of different lengths;
- Fig. 8a: a representation of a joint rod in which the first and the second component according to figure 7 are in a first mounting position of joint rod generating the minimum length possible of joint rod with that configuration of the first and the second component;
- Fig. 8b: a representation of a joint rod in which the first and the second component according to figure 7 are in a second mounting position of joint rod generating the maximum length possible of joint rod with that configuration of the first and the second component;
- Fig. 9: an alternative representation of a first component containing rectangular housings and of a second component comprising prismatic protuberances with a rectangular base that can be connected to each other in different positions to generate a joint rod of different lengths;
- Fig. 10a: a representation of a joint rod in which the first and the second component according to figure 9 are in a first mounting position of joint rod generating the minimum length possible of joint rod with that configuration of the first and the second component;
- Fig. 10b: a representation of a joint rod in which the first and the second component according to figure 9 are in a second mounting position of joint rod generating the maximum length possible of joint rod with that configuration of the first and the second component; and
- Fig. 11: an alternative representation of a first component containing a rectangular housing in the form of a slot and of a second component comprising prismatic protuberances with a rectangular base that can be connected to each other in different positions to generate a joint rod of different lengths;

In the figures, the same elements or having the same function are provided with the same reference numerals.

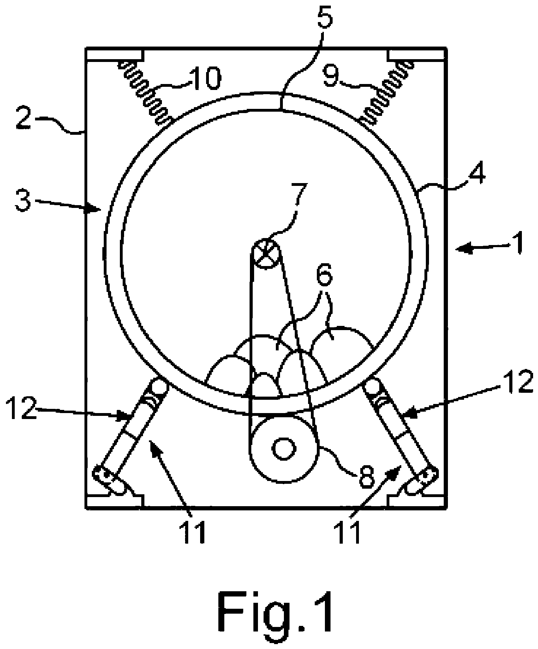

In figure 1, a laundry care appliance 1, which is in particular a washing machine, but can also be a washer-dryer or a dryer, is shown in a simplified front view. It can be observed that the laundry care appliance 1 comprises a housing 2 as well as an oscillating system 3 contained in the housing 2. The oscillating system 3 is composed of a washing drum 5 contained within the tub 4. Washing items 6 to be washed are placed as an example in the washing drum 5. The washing drum 5 is mounted in a rotating manner about a rotation axis 7 perpendicular to the plane of the figure. To this end, a drive motor 8, e.g. a belt drive motor, can be provided.

The oscillating system 3 also comprises two springs 9 y 10, by means of which the oscillating system 3, the tub 4 and the washing drum 5 are mounted in the housing 2, specifically in the top area, in a movable manner.

Furthermore, a dampening arrangement 11 is provided, which comprises at least two rotational vibration dampening devices 12 in the embodiment. The oscillating system 3 rests on this dampening arrangement 11. For the own dampening of high amplitudes, the rotational vibration dampening devices 12 are utilized.

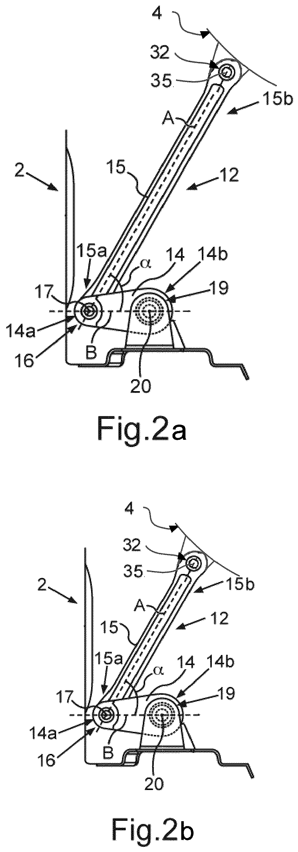

In figure 2a, a rotational vibration dampening device 12 according to the current state of the art and comprising a first joint rod 14 and a second joint rod 15 can be observed. The first joint rod 14 is connected in an articulated manner at its end 14a with the end 15a of the second joint rod 15 through its first rotation articulation 16. The rotation axis 17 of the first rotation articulation 16 is preferably oriented perpendicularly to the plane of the figure. Both joint rods 14 and 15 can be rotated about the rotation axis 17, which is oriented perpendicularly to the longitudinal axes A and B. Furthermore, the joint rods 14 and 15 are guided inside each other in the articulation 16 so that the rotating movement of the joint rods 14 and 15 relative to each other is already limited to an interval lower than 360°.

Furthermore, the first joint rod 14 is connected in an articulated manner to the housing 2 at its end 14b by means of a second rotation articulation 19, wherein a rotation axis 20 of this second rotation articulation 19 is also oriented perpendicularly to the plane of the figure. The second joint rod 15 is connected to the tub 4 at is end 15b facing away the first joint rod 14 by means of a third rotation articulation 32, wherein a rotation axis 35 of this third rotation articulation 32 is also oriented perpendicularly to the plane of the figure.

In this working orientation, both joint rods 14 and 15 can be moved relative to each other so the angle a between the longitudinal axes A and B changes correspondingly during the oscillation. As it can be seen, the first joint rod 14 is mounted in a rotating manner relative to the housing 2 through the second articulation 19.

In figure 2b, a rotational vibration dampening device 12 according to the current state of the art and similar to the one shown in figure 2a can be observed, although it comprises a joint rod 15 of a much smaller length than the joint rod 15 shown in figure 2a. This is the current way to adapt the rotational vibration dampening device 12 by manufacturing joint rods 14, 15 of different lengths depending on the working environment of the rotational damper.

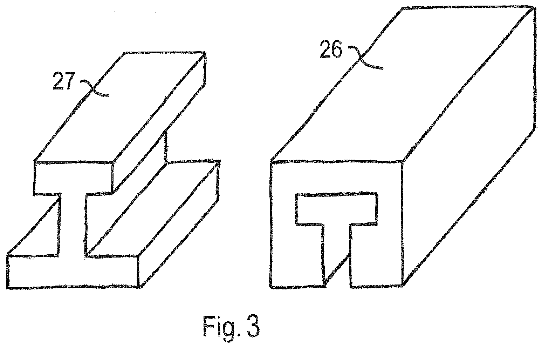

In figure 3, a possible profile of the first component 26 and a possible profile of the second component 27 of joint rod 14, 15 are shown, which can be connected to each other by a positive connection and/or pressure. In this case, the first component 26 can slide on the second component 27, thereby generating multiple connecting positions to cover all the possible lengths of joint rod 14, 15 that are required. In figure 3, two complementary geometries are shown in which one fits into the other one and this can be realized in such a manner that they fit into each other with interference so that the first component 26 and the second component 27 are fixedly kept in the desired position. However, in this embodiment and if an even more robust connection of the first component 26 and the second component 27 is required, alternative connecting methods such as welding/soldering or glueing or additional connecting elements 28 such as a clamp can be added. The geometry of the connection shown in figure 3 shows a T-shaped axial section in the second component 27 and a T-shaped axial recess in the first component 26. However, other axial sections mutually fitting are possible, for example, U-, H-shaped, etc. Up to two rectangular sections both in the first component 26 and the second component 27 can be connected to each other in diverse positions by means of additional connections such as glueing or welding/soldering or by means of additional connecting elements 28 such as clamps or screws or a washer-screw mechanism or any combination of all of them. The type of connection shown in figure 3 has the advantage of being able to generate a joint rod 14, 15 of any length.

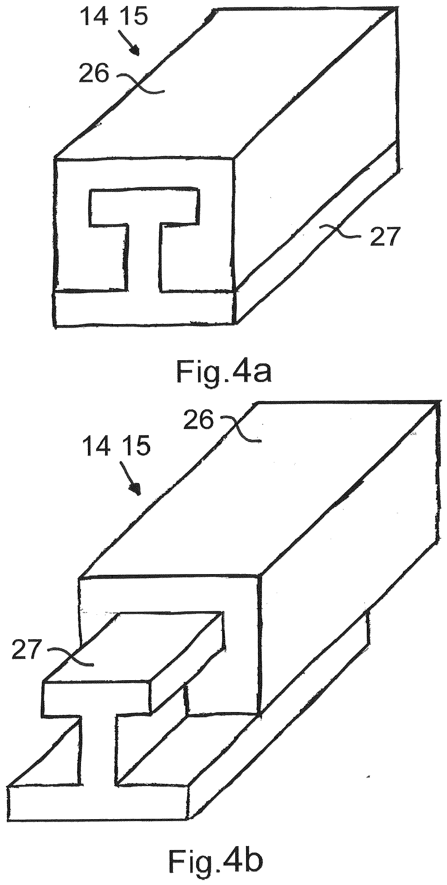

In figures 4a and 4b, joint rods 14, 15 of different lengths depending on the connecting area of the first component 26 and the second component 27 are represented. Figure 4a shows a joint rod 14, 15 shorter than the joint rod 14, 15 shown in figure 4b. To this, it is sufficient to vary the position in which the first component 26 and the second component 27 connect to each other. In this manner, it is possible to obtain joint rods 14, 15 of the length required depending on the working environment of the same by adapting the length of the connecting sections of the first component 26 and the second component 27.

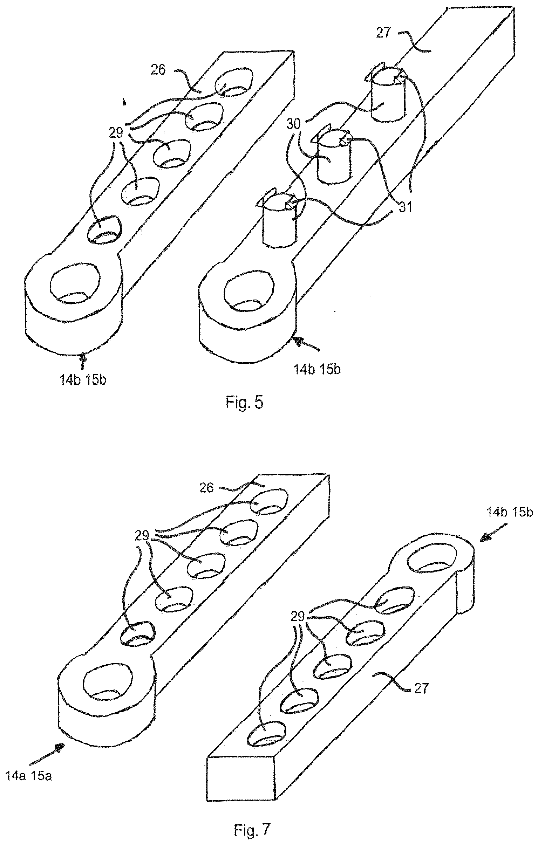

Figure 5 shows a first component 26 comprising five housings 29 and a second component 27 comprising in this case three protuberances 30 that, in turn, comprise a retaining element 31. The housings 29 shown in figure 5 are continuous housings in this case since, in this manner, a visual check on whether the connection of the first component 26 and the second component 27 is correct is eased. The first component 26 can be connected to the second component 27 by inserting the protuberances 30 into the housings 29 in diverse positions. In this case, the number of housings 29 needs to be bigger than the number of protuberances 30 so as to have multiple connecting positions between the first component 26 and the second component 27 and have joint rods 14, 15 of different lengths originated in this manner. Furthermore, the protuberances 30 comprise in this case a retaining element 31 located at the final end at the protuberance 30, which collides with the perimeter of the housing 29 of the first component 26 in the connecting position of the first component 26 with the second component 27. In figure 5, a retaining element 31 is shown in two sections of the perimeter of the end of each of the protuberances 30. Said retaining element 31 hinders/prevents the separation of the first component 26 from the second component 27. In figure 5, the retaining element 31 occupies two sections of the perimeter of the protuberance 30, although it can occupy only one section or the entire perimeter of the end of the protuberance 30 depending on how rigid the connection between the first component 26 and the second component 27 needs to be. The protuberance 30 from figure 5 has the geometry of a cylinder with a circular section but it is necessary to take into account that the section of the protuberance could have another geometry such as an ellipse or a polygon of n sides. The polygon of n sides can be regular or not.

In figure 5, five housings 29 are shown in the first component 26 in an exemplary manner, although the first component 26 can have any natural number of housings 29. On the other hand, the second component 27 shows 3 protuberances 30, although the second component 27 can have any natural number of protuberances 30.

In figure 5, all of the protuberances 30 show retaining elements 31, although this is not essential and protuberances 30 with retaining element 31 and protuberances 30 without a retaining element 31 can coexist.

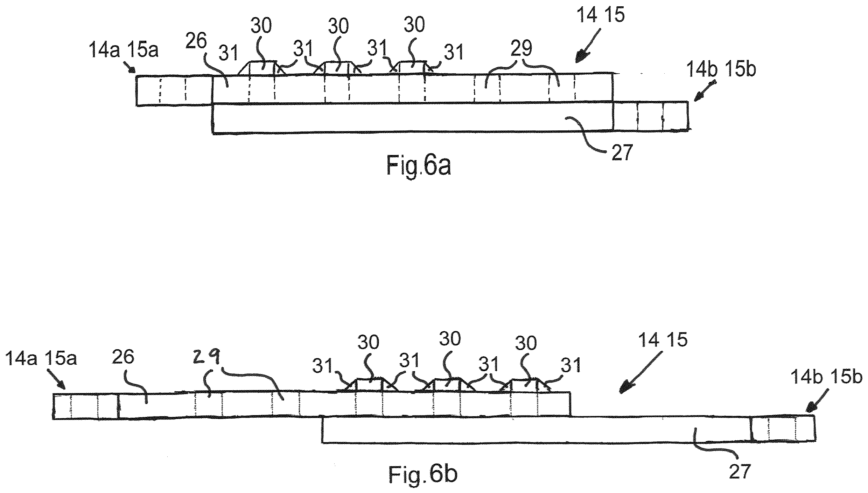

In figures 6a and 6b, joint rods 14, 15 of a different length depending on the connecting area of the first component 26 and the second component 27 are represented. Figure 6a shows a joint rod 14, 15 having the shortest length possible with the configuration of the first component 26 and the second component 27 shown in figure 5. Figure 6a shows a first component 26 with a first end 14a, 15a and comprising five housings 29 up to the end opposite to the end 14a, 15a, whereas the second component 27 shows a first end 14b, 15b and comprises three protuberances 30 up to the end opposite to the end 14b, 15b. When the protuberances 30 of the second component 27 are connected to the nearest housings 29 to the end 14a, 15a, they produce the shortest length possible of joint rod 14, 15. Figure 6b shows a joint rod 14, 15 of the longest length possible with the configuration of the first component 26 and the second component 27 shown in figure 5. Figure 6b shows a first component 26 with a first end 14a, 15a and comprising five housings 29 up to the end opposite to the end 14a, 15a, whereas the second component 27 shows a first end 14b, 15b and comprises three protuberances 30 up to the end opposite to the end 14b, 15b. When the protuberances 30 of the second component 27 are connected to the most distant housings 29 from the end 14a, 15a, they produce the longest length possible of joint rod 14, 15. Multiple lengths can be obtained by varying the position in which the housings 29 of the first component 26 and the protuberances 30 of the second component 27 are connected to each other. Obviously, multiple lengths are obtained in the multiple connecting positions between the housings 29 of the first component 26 and the protuberances 30 of the second component 27. Once the first component 26 and the second component 27 are connected to each other, the joint rod 14, 15 has a first end 14a, 15a and a second end 14b, 15b opposite to the first one and any of the ends shown in figures 6a and 6b can act as the first end and second end.

It can be also observed how the retaining element 31 collides with the first component 26 to hinder/prevent the separation of the first component 26 with respect to the second component 27. The rigidity of the joint rod 14, 15 shown in figures 6a and 6b can be reinforced if needed by means of other connecting methods such as welding/soldering and glueing or by means of additional connecting elements 28 such as screws, screws-nuts or clamps. The easiest way to secure the connection by means of a screw or a screw-nut would be making a through-hole in the protuberance 30 allowing that the screw is received and the same comes out so that the nut can be mounted.

In figure 7, a first component 26 having a first end 14a, 15a and five housings 29 up to the end opposite to the end 14a, 15a and a second component 27 having a first end 14b, 15b and also five housings 29 up to the opposite end are shown. Obviously, the number of housings 29 can be any natural number both in the first component 26 and the second component 27. The bigger the number of housings 29 is in any of the first component 26 and/or the second component 27, the bigger the number of positions in which they can be connected to each other will be and, therefore, the bigger the number of possible lengths of joint rod 14, 15 that can be generated will be. This type of first component 26 and second component 27 can be connected to each other by a positive connection or by pressure and, more preferably, by means of connecting techniques such as a welding/soldering or glueing or by means of additional connecting elements 28, the connecting means 28 being preferably once more clamps, screws, a screw-nut mechanism, bolts or elements equivalent to those named.

The geometry of the represented housings 29 is circular but any other geometry is possible.

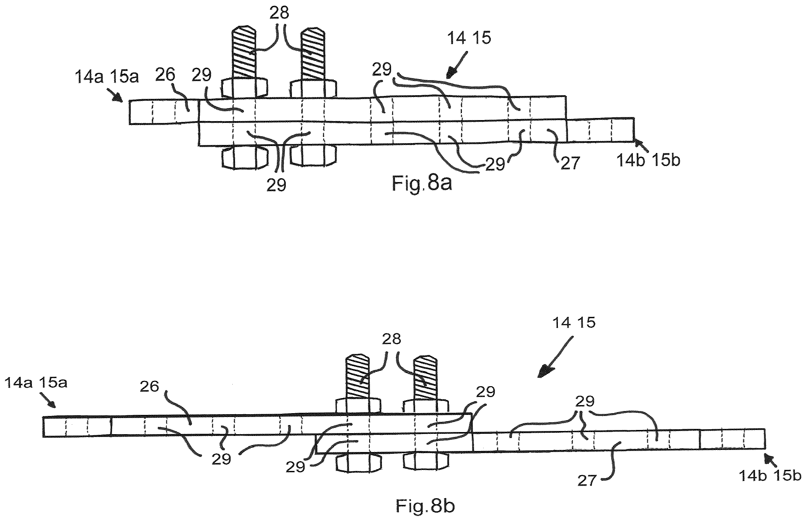

In figures 8a and 8b, joint rods 14, 15 of a different length depending on the connecting area of the first component 26 and the second component 27 are represented. Figure 8a shows a joint rod 14, 15 having the shortest length possible with the configuration of the first component 26 and the second component 27 shown in figure 7. Figure 8a shows a first component 26 with a first end 14a, 15a and comprising five housings 29 up to the end opposite to the end 14a, 15a, whereas the second component 27 shows a first end 14b, 15b and also comprises five housings 29 up to the end opposite to the end 14b, 15b. When the housings 29 of the second component 27 are connected to the nearest housings 29 to the end 14a, 15a of the first component 26, they produce the shortest length possible of joint rod 14, 15. Figure 8b shows a joint rod 14, 15 of the longest length possible with the configuration of the first component 26 and the second component 27 shown in figure 7. Figure 8b shows a first component 26 with a first end 14a, 15a and comprising five housings 29 up to the end opposite to the end 14a, 15a, whereas the second component 27 shows a first end 14b, 15b and has five housings 29 up to the end opposite to the end 14b, 15b. By connecting the housings 29 of the second component 27 to the most distant housings 29 from the end 14a, 15a of the first component 26, they produce the longest length possible of joint rod 14, 15. Multiple lengths can be obtained by varying the position in which the housings 29 of the first component 26 and of the second component 27 are connected to each other. Once the first component 26 and the second component 27 are connected to each other, the joint rod 14, 15 has a first end 14a, 15a and a second end 14b, 15b opposite to the first one and any of the ends shown in figures 8a and 8b can act as the first end and second end. In figures 8a and 8b, two connecting elements 28 are shown, which are screw-nut mechanisms in this case but other connecting elements 28 such as bolts, rivets, clamps are also possible.

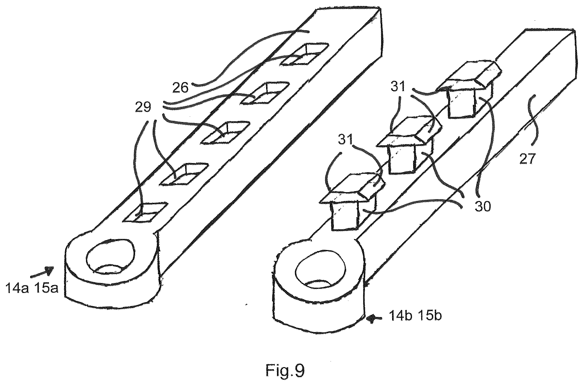

Figure 9 shows a first component 26 comprising five housings 29 and a second component 27 comprising in this case three protuberances 30 that, in turn, comprise a retaining element 31. The housings 29 shown in figure 9 are continuous housings in this case since, in this manner, a visual check on whether the connection of the first component 26 and the second component 27 is correct is eased. Furthermore, the first component 26 can be connected to the second component 27 by inserting the protuberances 30 into the housings 29, in diverse positions. The number of housings 29 needs to be bigger than the number of protuberances 30 so as to have multiple connecting positions between the first component 26 and the second component 27. Moreover, the protuberances 30 comprise in this case a retaining element 31 located at the final end at the protuberance 30, which collides with the first component 26 in the connecting position of the first component 26 with the second component 27. In figure 9, a retaining element 31 is shown in the entire perimeter of the end of each of the protuberances 30. Said retaining element 31 hinders/prevents the separation of the first component 26 from the second component 27. Figure 9 shows a retaining element 31 occupying the entire perimeter of the protuberance 30, although it can occupy just a section of the end's perimeter of the protuberance 30 depending on how rigid the connection between the first component 26 and the second component 27 needs to be. The protuberance 30 from figure 9 has the geometry of a prism with a rectangular section so as to ensure that the first component 26 has no rotation at all relative to the second component 27. This can be also achieved easily with prisms whose section is that of a prism of n sides, n being at least 3. The most preferred configuration to prevent the rotation of the first component 26 relative to the second component 27 is that of a protuberance 30 whose section is that of a 4-sided polygon and, even more preferably, that of a 4-sided regular polygon such as a square, a rectangle, a rhombus or a trapezium.

In figure 9, five housings 29 are shown in the first component 26 in an exemplary manner, although the first component 26 can have any natural number of housings 29. On the other hand, the second component 27 shows 3 protuberances 30, although the second component 27 can have any natural number of protuberances 30.

In figure 9, all of the protuberances 30 show retaining elements 31, although this is not essential and protuberances 30 with retaining element 31 and protuberances 30 without a retaining element 31 can coexist.

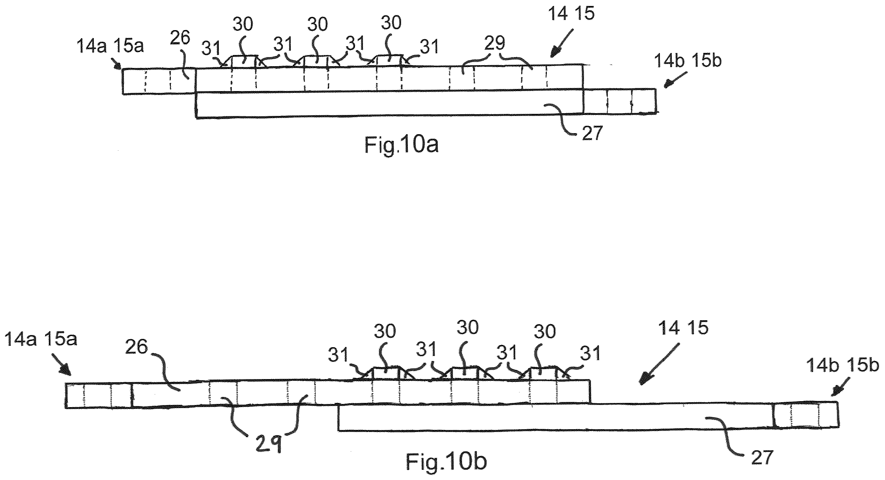

In figures 10a and 10b, joint rods 14, 15 of different lengths depending on the connecting area of the first component 26 and the second component 27 are represented. Figure 10a shows a joint rod 14, 15 having the shortest length possible with the configuration of the first component 26 and the second component 27 shown in figure 9. Figure 10a shows a first component 26 with a first end 14a, 15a and comprising five housings 29 up to its opposite end, whereas the second component 27 shows a first end 14b, 15b and comprises three protuberances 30 up to its opposite end. When the protuberances 30 of the second component 27 are connected to the nearest housings 29 to the end 14a, 15a, they produce the shortest length possible of joint rod 14, 15. Figure 10b shows a joint rod 14, 15 of the longest length possible with the configuration of the first component 26 and the second component 27 shown in figure 9. Figure 10b shows a first component 26 with a first end 14a, 15a and comprising five housings 29 up to the end opposite to the end 14a, 15a, whereas the second component 27 shows a first end 14b, 15b and comprises three protuberances 30 up to the end opposite to the end 14b, 15b. When the protuberances 30 of the second component 27 are connected to the most distant housings 29 from the end 14a, 15a, they produce the longest length possible of joint rod 14, 15. Multiple lengths can be obtained by varying the position in which the housings 29 of the first component 26 and the protuberances 30 of the second component 27 are connected to each other. All the lengths of joint rod 14, 15 are possible by means of this embodiment. It can be also observed how the retaining element 31 collides with the first component 26 to hinder/prevent the separation of the first component 26 with respect to the second component 27. The rigidity of the joint rod 14, 15 shown in figures 10a and 10b can be increased if needed by means of other connecting methods such as welding/soldering and glueing or by means of additional connecting elements 28 such as screws, screws-nuts or clamps.

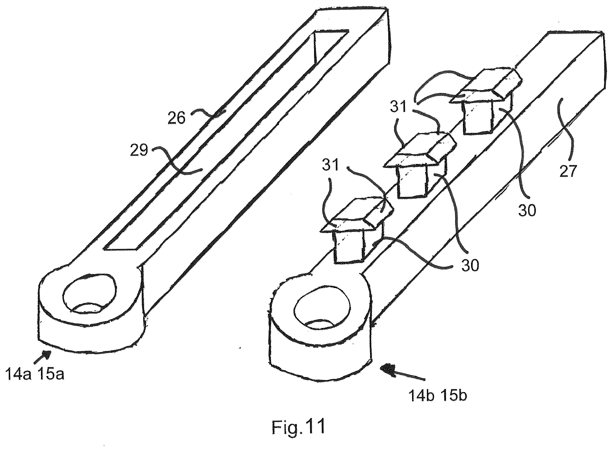

Figure 11 shows a first component 26 comprising just one housing 29 and a second component 27 comprising in this case three protuberances 30 that, in turn, comprise a retaining element 31. In this case, the housing 29 shown in figure 11 is a housing 29 slanted in the longitudinal direction of the first component 26 in the form of a continuous slot. The first component 26 can be connected to the second component 27 by inserting the protuberances 30 into the housing 29 in diverse positions. In this configuration of the invention, the protuberances 30 can be housed in different positions of the housing 29, thereby generating joint rods 14, 15 of different lengths. It is obvious that it is enough to have a sole protuberance 30 to obtain all the possible lengths within the range of lengths allowed by the housing 29. The range of lengths of joint rod 14, 15 obtainable is equal to the length in axial direction of the housing 29. Furthermore, in this case the protuberances 30 comprise a retaining element 31 located at the final end at the protuberance 30, which collides with the perimeter of the housing 29 of the first component 26 in the connecting position of the first component 26 with the second component 27. In figure 11, a retaining element 31 is shown in the entire perimeter of the end of each of the protuberances 30. Said retaining element 31 hinders/prevents the separation of the first component 26 from the second component 27. In figure 11, the retaining element 31 occupies the entire perimeter of the protuberance 30, although it can occupy just a section of the end's perimeter of the protuberance 30 depending on how necessary it is to secure the connection between the first component 26 and the second component 27. The protuberance 30 from figure 11 has the geometry of a prism with a rectangular section so as to ensure that the first component 26 has no rotation at all relative to the second component 27. This geometry is the preferred geometry with this type of housing 29. The most preferred configuration to prevent the rotation of the first component 26 relative to the second component 27 is that of a protuberance 30 whose section is that of a 4-sided polygon and, even more preferably, that of a 4-sided regular polygon such as a square or a rectangle.

In figure 11, all of the protuberances 30 show retaining elements 31, although protuberances 30 with retaining element 31 and protuberances 30 without a retaining element 31 can coexist.

If it is intended to make a more robust joint rod 14, 15, connecting elements 28 limiting the axial movement of the protuberance 30 along the housing 29 can be added.

### Reference numerals

- 1: Laundry care appliance
- 2: Housing
- 3: Oscillating system
- 4: Tub
- 5: Drum
- 6: Washing items
- 7: Rotation axis
- 8: Drive motor
- 9: Spring
- 10: Spring
- 11: Dampening arrangement
- 12: Rotational vibration dampening device
- 14: First joint rod
- 14a: First end
- 14b: Second end
- 15: Second joint rod
- 15a: First end
- 15b: Second end
- 16: First rotation articulation
- 17: First rotation axis
- 19: Second rotation articulation
- 20: Second rotation axis
- 26: First component
- 27: Second component
- 28: Connecting element
- 29: Housing
- 30: Protuberance
- 31: Retaining element
- 32: Third rotation articulation
- 35: Third rotation axis
- A, B: Longitudinal axis
- α: Angle

## Claims

1. A rotational vibration dampening device (12) for a laundry care appliance (1) comprising a first joint rod (14), which comprises a first end (14a) and a second end (14b) opposite to the fist end (14a), and a second joint rod (15), which comprises a first end (15a) and a second end (15b) opposite to the first end (15a), wherein the first end (15a) of the second joint rod (15) is connected with the first end (14a) of the first joint rod (14), wherein the second end (14b) of the first joint rod (14) can be connected to a housing (2) of a laundry care appliance (1) and the second end (15b) of the second joint rod (15) can be connected to an oscillating system (3) of a laundry care appliance (1) **characterized in that** at least one of the joint rods (14, 15) has a variable length and the at least one joint rod (14, 15) of a variable length comprises a first component (26) and a second component (27) that can be connected to each other in at least two different positions, thereby obtaining at least two different lengths of joint rod (14, 15).

2. The rotational vibration dampening device (12) for a laundry care appliance (1) according to claim 1, **characterized in that** the first component (26) and the second component (27) can be connected to each other by a positive connection, by pressure or by any combination of these methods.

3. The rotational vibration dampening device (12) for a laundry care appliance (1) according to any of the preceding claims, **characterized in that** the first component (26) and the second component (27) can be connected to each other by glueing, soldering, welding or by any combination of said connecting techniques.

4. The rotational vibration dampening device (12) for a laundry care appliance (1) according to any of the preceding claims, **characterized in that** the first component (26) and the second component (27) can be connected to each other by a connecting element (28).

5. The rotational vibration dampening device (12) for a laundry care appliance (1) according to any of the preceding claims, **characterized in that** the at least one joint rod (14, 15) of a variable length comprises a first component (26) containing at least a housing (29) and a second component (27) containing at least a protuberance (30) so that the at least one housing (29) of the first component (26) and the at least one protuberance (30) of the second component (27) can be connected to each other in at least two different positions, thereby obtaining at least two different lengths of joint rod (14, 15).

6. The rotational vibration dampening device (12) for a laundry care appliance (1) according to claim 5, **characterized in that** the at least one housing (29) of the first component (26) and the at least one protuberance (30) of the second component (27) can be connected to each other by a positive connection, by pressure or by any combination of these methods.

7. The rotational vibration dampening device (12) for a laundry care appliance (1) according to any of claims 1 to 4, **characterized in that** the at least one joint rod (14, 15) of a variable length comprises a first component (26) containing at least a housing (29) and a second component (27) containing at least a housing (29) so that the first component (26) and the second component (27) can be connected to each other in at least two different positions, thereby obtaining at least two different lengths of joint rod (14, 15).

8. The rotational vibration dampening device (12) for a laundry care appliance (1) according to any of claims 5 to 6, **characterized in that** the at least one housing (29) of the first component (26) and the at least one protuberance (30) of the second component (27) have such a geometry that it prevents rotation of the first component (26) relative to the second component (27).

9. The rotational vibration dampening device (12) for a laundry care appliance (1) according to claim 8, **characterized in that** said geometry corresponds to that of a polygon of n sides, n being preferably bigger or equal to 3 and smaller or equal to 12, wherein n is more preferably bigger or equal to 4 and smaller or equal to 6 and, even more preferably, n equals 4.

10. The rotational vibration dampening device (12) for a laundry care appliance (1) according to any of claims 5 to 9, **characterized in that** the housing (29) is continuous.

11. The rotational vibration dampening device (12) for a laundry care appliance (1) according to claim 10, **characterized in that** the at least one protuberance (30) of the second component (27) comprises a retaining element (31) and that, once the first component (26) and the second component (27) are connected to each other, said retaining element (31) collides with at least a section of the perimeter of the at least one housing (29) of the first component (26), thereby preventing the separation of the first component (26) from the second component (27).

12. The rotational vibration dampening device (12) for a laundry care appliance (1) according to claim 11, **characterized in that** the retaining element (31) collides with the entire perimeter of the at least one housing (29) of the first component (26), thereby preventing the separation of the first component (26) from the second component (27).

13. The rotational vibration dampening device (12) for a laundry care appliance (1) according to any of the preceding claims, **characterized in that** the first joint rod (14) and the second joint rod (15) are made of plastics and/or metal.

14. A laundry care appliance (1) comprising a housing (2) in which an oscillating system (3) is mounted, **characterized in that** the laundry care appliance (1) comprises at least a vibration dampening device (12) according to any of claims 1 to 13.
